# EUROPÄISCHE PATENTSCHRIFT

(11) **EP 2 397 642 B1**
(45) Veröffentlichungstag und Bekanntmachung des Hinweises auf die Patenterteilung: **12.12.2012**
(21) Anmeldenummer: 10006291.8
(22) Anmeldetag: 17.06.2010
(51) Int. Cl.: E06B 3/96

(54) **Verfahren zum Herstellen einer Eckverbindung für einen Rahmen eines Fensters oder einer Tür**
Method for producing a corner connection for a frame of a window or a door
Procédé de fabrication d'une liaison angulaire pour un cadre de fenêtre ou de porte

(43) Veröffentlichungstag der Anmeldung: 21.12.2011
(73) Patentinhaber: Kochs GmbH, 52134 Herzogenrath (DE)
(72) Erfinder: Piek, Norbert, 52134 Herzogenrath (DE)
(74) Vertreter: Müller-Gerbes Wagner Albiger Patentanwälte

(56) Entgegenhaltungen:
- DE-U1-202007 001 236

## Beschreibung

Die Erfindung betrifft ein Verfahren zum Herstellen einer Eckverbindung für einen Rahmen eines Fensters oder einer Tür, bei dem ein erstes und ein zweites Kunststoff-Hohlprofil im Bereich ihrer Enden miteinander verschweißt werden, wobei das erste Hohlprofil und das zweite Hohlprofil jeweils eine von den jeweiligen Sichtflächen begrenzte Überschlagskammer aufweisen, wobei jeweils eine Sichtfläche die Frontsichtfläche und die angrenzende Sichtfläche die Überschlagssichtfläche bildet und die Sichtflächen des ersten Hohlprofils einen ersten Eckwinkel einschließen und die Sichtflächen des zweiten Hohlprofils einen zweiten Eckwinkel einschließen und nach Herstellung der Eckverbindung die Frontsichtfläche des zweiten Hohlprofils durchgängig über die gesamte Längserstreckung desselben verläuft, während die Frontsichtfläche des ersten Hohlprofils stumpf an der Frontsichtfläche des zweiten Hohlprofils endet.

Die bekannten Verfahren zum Herstellen einer Eckverbindung für einen Rahmen eines Fensters oder Tür, bei dem Kunststoff-Hohlprofile verwendet werden, beruhend darauf, die zu verbindenden Kunststoff-Hohlprofile in ihrem jeweiligen Endbereich mit einem unter 45° verlaufenden Gehrungsschnitt zu versehen und anschließend die Schnittflächen üblicherweise mittels eines Schweißspiegels zu erwärmen und anschließend die Gehrungsschnittflächen miteinander zu verpressen, wodurch eine Verschweißung bewirkt wird. Dies hat sich bewährt und ist vielfältig im Einsatz.

Es bestehen jedoch darüber hinaus spezielle Marktanforderungen für Rahmen eines Fensters oder einer Tür aus Kunststoff-Hohlprofilen, der den Look bzw. die Optik eines Holzrahmens aufweisen sollen, bei dem die horizontal verlaufenden Rahmenabschnitte über die gesamte Rahmenbreite verlaufen und die vertikalen Rahmenabschnitte stumpf auf die horizontal verlaufenden Rahmenabschnitte stoßen oder auch umgekehrt. Dies ist beispielsweise in den Niederlanden sehr gebräuchlich.

Soll ein solcher Look bei einem Rahmen aus Kunststoff-Hohlprofilen nachgeahmt werden, bedingt dies mehrere Arbeitsschritte, um die zu verschweißenden Kunststoff-Hohlprofile vorzubereiten, da auch bei dieser Anwendung auf Gehrungsschnitte und das Verschweißen der Gehrungsflächen der zu verschweißenden Hohlprofile aus Stabilitätsgründen nicht verzichtet werden kann.

Die gattungsbildende DE 20 2007 001 236 U1 schlägt dazu vor, dass das horizontale und über die gesamte Breite des Rahmens zumindest optisch verlaufende Kunststoff-Hohlprofil einen Gehrungsschnitt erhält, der die Frontsichtfläche des Profils ausspart, so dass ein abgesetzter Überschlag der Frontsichtfläche erhalten wird. Das entsprechende Kunststoff-Hohlprofil, welches den vertikalen Rahmenabschnitt bildet, erhält ebenfalls einen Gehrungsschnitt und wird im Bereich der Frontsichtfläche nach Maßgabe des abgesetzten Überschlages des benachbarten Kunststoff-Hohlprofils ausgeklinkt, so dass eine Schweißverbindung der Gehrungsschnittflächen erfolgen kann und nach dem Herstellen der Eckverbindung der abgesetzte Überschlag des horizontalen Kunststoff-Hohlprofils den Gehrungsbereich des vertikalen Kunststoff-Hohlprofils überdeckt und sich die gewünschte Optik einstellt. Das aus der genannten DE 20 2007 001 236 U1 ersichtliche Verfahren eignet sich jedoch nur in den Fällen, in denen die beiden zu verbindenden Kunststoff-Hohlprofile identische Querschnittsgestaltung aufweisen. Insbesondere müssen die beiden von den jeweiligen Sichtflächen der Kunststoff-Hohlprofile eingeschlossenen Winkel gleiche Größe aufweisen.

Die Erfindung hat sich die Aufgabe gestellt, ein Verfahren zum Herstellen einer Eckverbindung für einen Rahmen eines Fensters oder einer Tür vorzuschlagen, mit dem erste und zweite Kunststoff-Hohlprofile im Bereich ihrer Enden miteinander verschweißt werden können, und zwar unabhängig davon, ob beide Hohlprofile identische Querschnittsgestaltung oder voneinander abweichende Querschnittsgestaltungen aufweisen, insbesondere die von den Frontsichtflächen eingeschlossenen Eckwinkel übereinstimmen oder voneinander abweichen.

Damit soll die Möglichkeit geschaffen werden, auch solche Profile zu verbinden, bei denen die Frontsichtflächen des horizontal verlaufenden Profils einen Winkel größer 90° einschließen, während die Sichtflächen des vertikal verlaufenden Profils einen hiervon abweichenden Winkel einschließen oder umgekehrt. Es ist nämlich in der Praxis beispielsweise üblich, einen vertikalen Holm zu verwenden, dessen Sichtflächen einen Eckwinkel von 90° einschließen, während der untere horizontal verlaufende Rahmenholm Sichtflächen aufweist, die einen Winkel größer 90° einschließen, d.h. die Überschlagssichtfläche fällt schräg nach außen ab.

Zur Lösung der gestellten Aufgabe wird erfindungsgemäß ein Verfahren mit den Merkmalen des Patentanspruchs 1 vorgeschlagen.

Vorteilhafte Ausgestaltungen und Weiterbildungen der Erfindung sind Gegenstand der abhängigen Ansprüche.

Das im Rahmen der Erfindung vorgeschlagene Verfahren zum Herstellen einer Eckverbindung für einen Rahmen eines Fensters oder einer Tür umfasst folgende Arbeitsschritte:
a) in das erste Hohlprofil wird eine unter einem Winkel von 45° zur Längserstreckung desselben verlaufender Gehrungsschnittfläche eingebracht, die sich vom Ende des ersten Hohlprofils und rechtwinklig zur Frontsichtfläche bis in die Überschlagskammer erstreckt
b) die Überschlagskammer des ersten Hohlprofils wird senkrecht zu den Sichtflächen bis zu einer Eintrittslinie des Gehrungsschnittes in die Überschlagskammer ausgeklinkt;
c) die Frontsichtfläche des ersten Hohlprofils wird in einer der Breite der Frontsichtfläche des zweiten Hohlprofils entsprechenden Höhe ausgehend vom Ende des ersten Hohlprofils entfernt;
d) in das zweite Hohlprofil wird unter Belassung eines abgesetzten Überschlages der Frontsichtfläche eine unter einem Winkel von 45° zur Längserstreckung desselben verlaufende Gehrungsschnittfläche eingebracht;
e) die Überschlagskammer des zweiten Hohlprofils wird ausgehend von der Gehrungsschnittfläche in einem dem ersten Eckwinkel des ersten Hohlprofils entsprechenden Winkel zur Frontsichtfläche und unter Fortsetzung des abgesetzten Überschlages derselben ausgeklinkt;

Hierbei sollte jedoch bemerkt werden, dass die einzelnen vorgenannten Arbeitschritte auch in einer anderen Abfolge ablaufen können.

Nachdem die vorgenannten Arbeitsschritte a) bis e) durchgeführt worden sind und die beiden Kunststoff-Hohlprofile dementsprechend vorbereitet worden sind, werden sie in einem weiteren Arbeitsschritt zumindest bereichsweise unter Zwischenlage eines temporär an den einander zugewandten Schnittflächen angelegten Schweißspiegels erwärmt und anschließend miteinander verschweißt.

Im Rahmen des erfindungsgemäßen Verfahrens ist es somit möglich, Kunststoff-Hohlprofile im Bereich ihrer Enden miteinander zu verschweißen, deren Sichtflächen identische oder voneinander abweichende Eckwinkel einschließen.

Nach einem Vorschlag der Erfindung wird die Dicke des abgesetzten Überschlages im zweiten Hohlprofil so bemessen, dass sie der Tiefe, mit welcher die Frontsichtfläche des ersten Hohlprofils entfernt wird, entspricht, so dass ein gleichmäßiger Übergang zwischen den angrenzenden und miteinander verschweißten Kunststoff-Hohlprofilen erreicht wird.

Es ist bei Kunststoff-Hohlprofilen für die Herstellung von Rahmen eines Fensters oder einer Tür üblich, dass diese jeweils eine der Aufnahme von Verstärkungsprofilen dienende Kammer aufweisen, in welche beispielsweise metallische Verstärkungsprofile eingebracht werden. Erfindungsgemäß wird vorgeschlagen, dass die Dicke des abgesetzten Überschlags im zweiten Hohlprofil und die Tiefe, mit welcher die Frontsichtfläche des ersten Hohlprofils entfernt wird, so gewählt werden, dass die jeweils die Verstärkungsprofile aufnehmenden Kammern der Hohlprofile vollständig erhalten bleiben. Auf diese Weise wird verhindert, dass eventuell im Eckverbindungsbereich eintretende Feuchtigkeit in die der Aufnahme der Verstärkungsprofile dienenden Kammern gelangen kann und dort zu einer unerwünschten Korrosion der Verstärkungsprofile führt.

Die Dicke des abgesetzten Überschlages beträgt nach einem Vorschlag der Erfindung 3 bis 50 mm. Dies richtet sich je Profilgestaltung und Anwendungsfall und kann vom Fachmann individuell ausgewählt werden.

Die nach dem Entfernen der Frontsichtfläche des ersten Hohlprofils verbleibende und in der Frontsichtfläche endende Schnittfläche wird nach einem weiteren Vorschlag unter einem komplementär zum zweiten Eckwinkel des zweiten Hohlprofils verlaufenden Winkel β ausgeführt, um den abgesetzten Überschlag des zweiten Hohlkammerprofils optimal anzulegen und nur einen geringen Spalt zwischen den miteinander verschweißten Kunststoff-Hohlprofilen entstehen zu lassen, was optisch außerordentlich vorteilhaft ist.

Durch das erfindungsgemäße Verfahren ist es möglich, die miteinander zu verschweißenden Kunststoff-Hohlprofile nicht nur im Bereich ihrer Gehrungsschnittflächen miteinander zu verschweißen, sondern auch im Bereich der jeweiligen stirnseitigen Enden der Überschlagskammern. Auch kann zusätzlich die Frontsichtfläche des ersten Hohlprofils, welche stumpf an den abgesetzten Überschlag des zweiten Hohlprofils angrenzt, in diesem Bereich mit dem abgesetzten Überschlag verschweißt werden.

Zur Herstellung der Schweißverbindung wird nach einem Vorschlag der Erfindung ein mehrere winklig aneinander angrenzende Schweißflächen aufweisender Schweißspiegel eingesetzt, der den Verläufen der Schnittflächen zwischen den winklig zueinander und durch die Arbeitsschritte a) bis e) vorbereiteten Enden der Kunststoff-Hohlprofile zu folgen vermag.

So kann der Schweißspiegel eine zwischen den Gehrungsschnittflächen der Hohlprofile positionierbare erste Schweißfläche, hieran angrenzend eine im Bereich der ausgeklinkten Überschlagskammer des zweiten Hohlprofils und an dem stirnseitigen Ende der Überschlagskammer des ersten Hohlprofils positionierbare zweite Schweißfläche und hieran anschließend eine zwischen der Überschlagssichtfläche des ersten Hohlprofils und dem stirnseitigen Ende der Überschlagskammer des zweiten Hohlprofils positionierbare dritte Schweißfläche aufweisen, so dass trotz Nutzung üblicher Eck-Schweißvorrichtungen mit einem Schweißspiegel eine nahezu vollständige Verschweißung aller aneinander angrenzender Flächen der zu verschweißenden Kunststoff-Hohlprofile bewirkt werden kann.

Sofern auch die Frontsichtflächen der stumpf aneinander stoßenden Hohlprofile verschweißt werden sollen, kann der Schweißspiegel noch eine weitere zwischen den Frontsichtflächen der Hohlprofile positionierbare Schweißfläche aufweisen.

Weitere Ausgestaltungen und Einzelheiten des erfindungsgemäßen Verfahrens werden nachfolgend anhand der ein Ausführungsbeispiel darstellenden Zeichnung näher erläutert. Es zeigen:
- Figur 1a: eine Querschnittsansicht eines ersten zu verschweißenden Kunststoff-Hohlprofils;
- Figur 1b: die auf die Frontsichtfläche gerichtete Ansicht eines nach dem erfindungsgemäßen Verfahren bearbeiteten und zur Verschweißung vorgesehenen Hohlprofils gemäß Figur 1a;
- Figur 1c: die Aufsicht auf das Kunststoff-Hohlprofil gem. Figur 1b;
- Figur 2a: die Querschnittsansicht eines zweiten zu verschweißenden Kunststoff-Hohlprofils;
- Figur 2b: die Aufsicht auf das nach dem erfindungsgemäßen Verfahren vorbereitete und zum Verschweißen geeignete Kunststoff-Hohlprofil gemäß Figur 2a;
- Figur 2c: das Kunststoff-Hohlprofil gem. Figur 2b in einer perspektivischen Darstellung aus anderem Blickwinkel;
- Figur 3: in perspektivischer Darstellung den Verschweißvorgang zwischen den beiden Kunststoff-Hohlprofilen gemäß Figuren 1 und 2 mit eingesetztem Schweißspiegel;
- Figur 4: den Schweißspiegel gemäß Figur 3 in der Seitenansicht;
- Figur 4b: den Schweißspiegel gemäß Darstellung der Figur 4a in der Ansicht von links;
- Figur 4c: in einer um 90° gedrehten Perspektive die Aufsicht auf den Schweißspiegel gemäß Figur 4a;
- Figur 5a: in perspektivischer Darstellung die nach Abschluss des Verschweißvorganges gemäß Figur 3 erstellte Eckverbindung mit Blickrichtung auf die Sichtflächen;
- Figur 5b: die Ansicht auf die Eckverbindung gemäß Figur 5a von der Rückseite/Innenseite der Rahmenprofile her betrachtet.

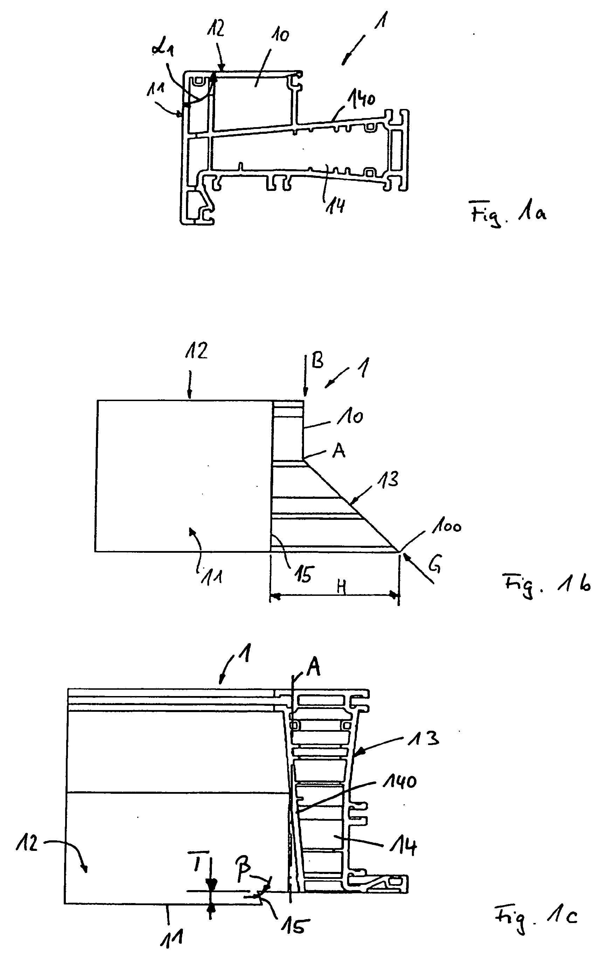

Aus der Figur 1a ist ein erstes Kunststoff-Hohlprofil 1 ersichtlich, welches zur Erstellung eines Rahmens eines Fensters oder einer Tür üblicherweise die vertikalen Rahmenholme bildet sowie ggf. auch den oberen horizontalen Rahmenholm.

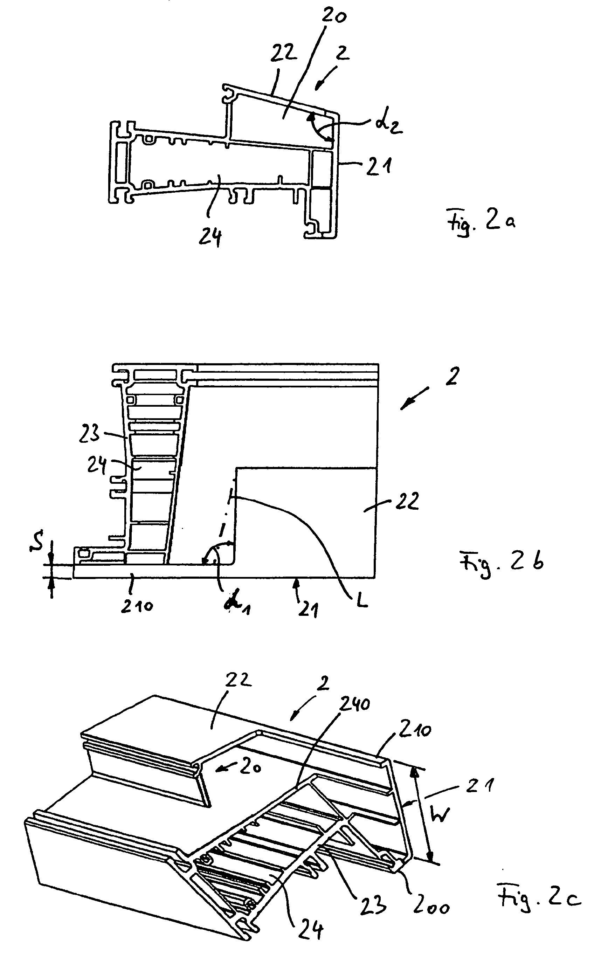

Demgegenüber zeigt die Figur 2a ein abweichendes Kunststoff-Hohlprofil 2, welches üblicherweise den unteren horizontalen Rahmenholm bildet.

Die beiden Kunststoff-Hohlprofile gemäß Figuren 1a und Figur 2a umfassen jeweils als wesentliche Bauteile eine der Aufnahme von Verstärkungsprofilen (nicht dargestellt) dienende Hauptkammer 14, 24, mehrere nicht näher bezeichnete Vorkammern sowie eine der Kammer 14 bzw. 24 benachbarte Überschlagskammer 10, 20, die von zwei Sichtflächen 11, 12; 21, 22 zur Außenseite hin begrenzt werden, von denen die Sichtflächen 11, 21 als Frontsichtflächen und die Sichtflächen 12, 22 als Überschlagssichtflächen bezeichnet werden.

Beim Kunststoff-Hohlprofil 1 gemäß Figur 1a schließen die Sichtflächen 11, 12 einen Eckwinkel α₁ von hier 90° ein, während beim Kunststoff-Hohlprofil 2 gemäß Figur 2a die Sichtflächen 21, 22 einen Eckwinkel α₂ von hier 105° einschließen.

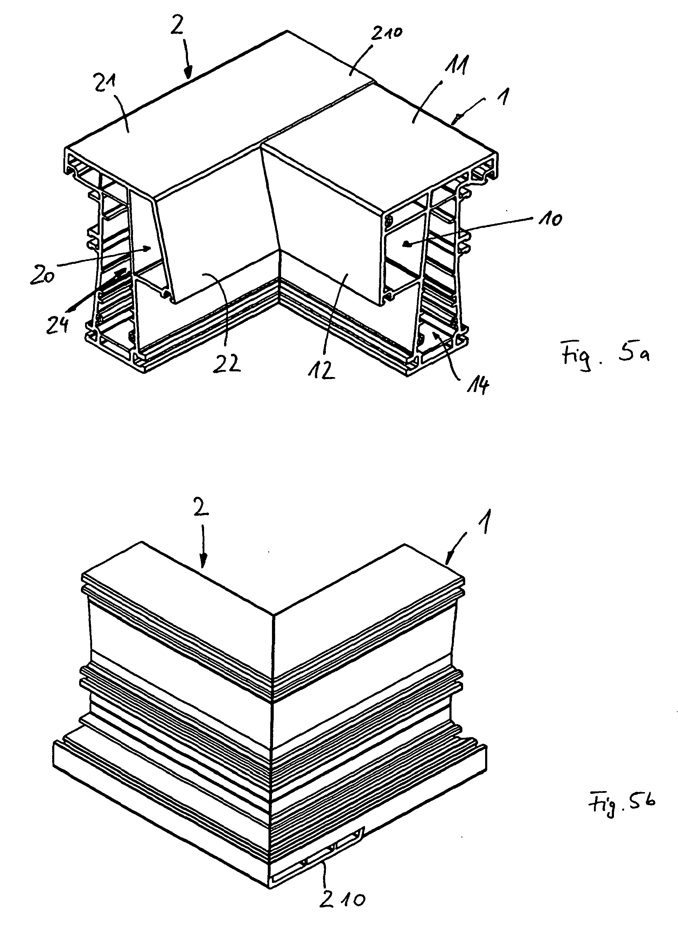

Um diese beiden unterschiedliche Eckwinkel α₁, α₂ aufweisenden Kunststoff-Hohlprofile 1, 2 im Eckbereich miteinander durch Verschweißen zu verbinden, wobei ein aus der Figur 5a ersichtlicher Look bzw. die Optik eines Holzrahmens entstehen soll, bei dem die Frontsichtfläche 21 des Kunststoff-Hohlprofils 2 über die gesamte Rahmenbreite verläuft, während die Frontsichtfläche 11 des Kunststoff-Hohlprofils 1 stumpf an der Frontsichtfläche 21 des Kunststoff-Hohlprofils 2 endet, sind eine Vielzahl von Arbeitsschritten nötig, die nachfolgend erläutert werden.

Zunächst wird anhand der Figuren 1b und 1c die Bearbeitung des ersten und üblicherweise vertikal verlaufenden Kunststoff-Hohlprofils 1 erläutert.

In an sich bekannter Weise erhält das erste Kunststoff-Hohlprofil 1 einen durch Pfeil G dargestellten und vom Ende 100 des ersten Hohlprofils 1 unter 45° ausgehend verlaufenden Gehrungsschnitt, der im Kunststoff-Hohlprofil 1 eine Gehrungsschnittfläche 13 ausbildet, welche u.a. durch die Kammer 14 verläuft. Diese Gehrungsschnittfläche 13 erstreckt sich rechtwinklig zur Frontsichtfläche 11.

Der die Gehrungsschnittfläche 13 erzeugende Gehrungsschnitt wird jedoch nicht über den gesamten Profilquerschnitt ausgeführt, sondern endet an einer mit A bezeichneten Eintrittslinie des Gehrungsschnittes bzw. der erstellten Gehrungsschnittfläche 13 in die Überschlagskammer 10.

Anschließend wird, wie durch Pfeil B angedeutet, die Überschlagskammer 10 des ersten Kunststoff-Hohlprofils 1 senkrecht zu den Sichtflächen 11, 21 bis zu der Eintrittslinie A des Gehrungsschnittes in die Überschlagskammer 10 ausgeklinkt, d.h. die Schnittführungen gemäß Pfeil G und Pfeil B treffen sich im Bereich der Eintrittslinie A der Gehrungsschnittfläche 13 in die Überschlagskammer 10, die rechtwinklig zur Frontsichtfläche 11 verläuft.

Die Ausklinkung der Überschlagskammer 10 gemäß Pfeil B erfolgt dabei bis auf den die Kammer 14 von der Überschlagskammer 10 trennenden Steg 140, wodurch die Kammer 14 vollständig erhalten bleibt.

Schließlich wird noch die Frontsichtfläche 11 des ersten Kunststoff-Hohlprofils 1 z.B. mittels eines Fräsers in einer der aus der Figur 2c ersichtlichen Breite W der Frontsichtfläche 21 des zweiten Kunststoff-Hohlprofils 2 entsprechenden Höhe H ausgehend vom Ende 100 des ersten Hohlprofils 1 entfernt, und zwar in einer Tiefe T, die der aus der Figur 2b ersichtlichen Dicke S eines nachfolgend noch erläuterten abgesetzten Überschlages 210 entspricht, beispielsweise in einer Tiefe T von 10 mm. Auch bei dieser Bearbeitung bleibt die Kammer 14 vollständig erhalten.

Demgegenüber erfährt das aus den Figuren 2a bis 2c ersichtliche zweite Kunststoff-Hohlprofil 2 eine abweichende und nachfolgend erläuterte Bearbeitung.

Zunächst wird unter Belassung eines abgesetzten Überschlages 210 der Frontsichtfläche 21 eine unter einem Winkel von 45° zur Längserstreckung des zweiten Hohlprofils 2 verlaufender Gehrungsschnitt ausgehend vom Ende 200 bewirkt, welcher eine Gehrungsschnittfläche 23 erzeugt, die u.a. durch die die nicht dargestellten Verstärkungsprofile aufnehmende Kammer 24 verläuft, jedoch den abgesetzten Überschlag 210 in der Dicke S von hier z.B. 10 mm der Frontsichtfläche 21 stehen lässt.

Im Bereich der Überschlagskammer 20 stellt sich durch diesen die Gehrungsschnittfläche 23 ausbildenden Gehrungsschnitt ein Verlauf der Überschlagssichtfläche 22 ein, der aus der Figur 2b anhand der strichpunktierten Linie L ersichtlich ist.

Nun wird die Überschlagskammer 20 des zweiten Kunststoff-Hohlprofils 2 mitsamt der Überschlagssichtfläche 22 ausgehend von der Gehrungsschnittfläche 23 in einem dem ersten Eckwinkel α₁ des ersten Hohlprofils 1 entsprechenden Winkel zur Frontsichtfläche 21, hier 90°, und unter Fortsetzung des abgesetzten Überschlages 210 derselben ausgeklinkt, d.h. der Bereich der Überschlagskammer 20 einschließlich Überschlagssichtfläche 22 zwischen der aus den Figuren 2b und 2c ersichtlichen Kantenführung und der strichpunktiert dargestellten Linie L wird entfernt, und zwar bis auf den die Kammer 24 von der Überschlagskammer 20 trennenden Steg 240, so dass sich die in den Figuren 2b und 2c mit ausgezogenen Linien dargestellte Querschnittskontur ergibt, bei der die Kammer 24 vollständig erhalten bleibt.

Darüber hinaus sollte noch erwähnt werden, dass am ersten Kunststoff-Hohlprofil 1 die Entfernung der Frontsichtfläche 11 in einer der Breite W der Frontsichtfläche 21 des zweiten Hohlprofils 2 entsprechenden Höhe vorzugsweise mit einem Fräswerkzeug durchgeführt wird, welches eine in der Frontsichtfläche 11 des ersten Hohlprofils endende Schnittfläche 15 zurücklässt, die unter einem Winkel β ausgerichtet ist, welcher komplementär zum Eckwinkel α₂ des zweiten Kunststoff-Hohlprofils 2 verläuft.

Die beiden in der vorangehend geschilderten Arbeitsweise vorbereiteten Kunststoff-Hohlprofile 1, 2 können sodann in der aus den Figuren 5a und 5b ersichtlichen Konfiguration im Eckbereich aneinandergefügt werden, wobei sich die Gehrungsschnittflächen aneinander anlegen und die Frontsichtfläche 21 des zweiten Kunststoff-Hohlprofils 2 trotz der Gehrungsschnitte aufgrund des abgesetzten Überschlages 210 über die gesamte Breite des Rahmens verläuft, während die Frontsichtfläche 11 des ersten Kunststoff-Hohlprofils 1 stumpf an diesen abgesetzten Überschlag 210 anstößt.

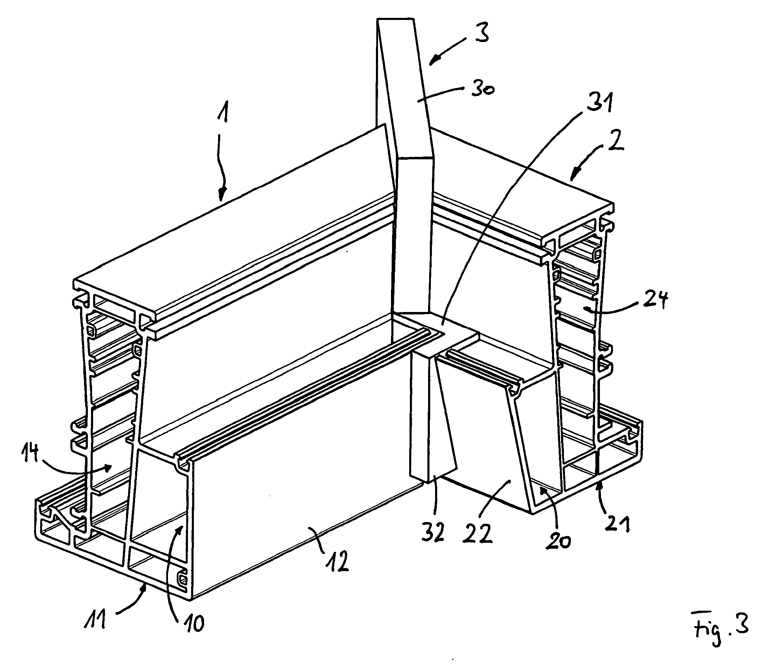

Es ist insofern offensichtlich, dass die solchermaßen gemäß Figuren 5a, 5b aneinander fügbaren Kunststoff-Hohlprofile 1, 2 miteinander verschweißt werden können, wozu in an sich bekannter Weise ein aus der Figur 3 ersichtlicher und temporär an den einander zugewandten Schnittflächen der Kunststoff-Hohlprofile 1, 2 angelegter Schweißspiegel 3 verwendet wird, der jedoch eine speziell angepasste Kontur aus mehreren aneinander angrenzenden Schweißflächen 30, 31, 32 aufweist, die nachfolgend noch näher erläutert werden. Es ist jedoch zu betonen, dass in an sich bekannter Weise mittels des Schweißspiegels 3 die aus der Figur 3 ersichtlichen, 90° zueinander versetzt angeordneten Kunststoff-Hohlprofile 1, 2 im Bereich ihrer bearbeiteten End-Schnittflächen erwärmt werden und nachfolgend nach Entfernen des Schweißspiegels 3 miteinander verpresst und an den erwärmten Bereichen verschweißt werden, so dass mit Ausnahme des speziell geformten Schweißspiegels 3 konventionelle Verschweißanlagen genutzt werden können.

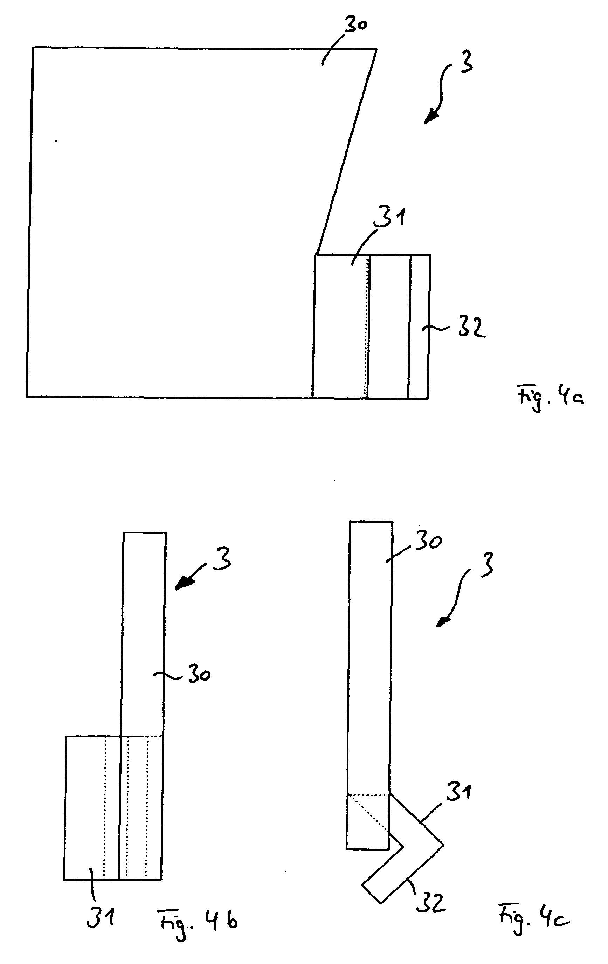

Wie aus einer Zusammenschau der Figuren 3 sowie 4a bis 4c ersichtlich, umfasst der eingesetzte Schweißspiegel 3 insgesamt drei aneinander angrenzende und einander fortsetzende Schweißflächen 30, 31, 32, die nach Maßgabe der erzeugten Schnittflächen winklig zueinander ausgerichtet sind.

Eine erste und flächenmäßig größte Schweißfläche 30 ist zwischen den Gehrungsschnittflächen 13, 23 der Kunststoff-Hohlprofile 1, 2 positionierbar und erwärmt die Gehrungsschnittflächen 13, 23 vollständig.

Hieran schließt sich eine zweite Schweißfläche 31 an, die in der Konfiguration gemäß Figur 3 zwischen dem stirnseitigen Ende der Überschlagskammer 10 des ersten Kunststoffrohrprofils 1 und der Oberseite des Steges 240 des zweiten Kunststoff-Hohlprofils 2 im Bereich der ausgeklinkten Überschlagskammer 20 verläuft, während eine sich hieran unter einem rechten Winkel anschließende dritte Schweißfläche 32 zwischen dem stirnseitigen Ende der ausgeklinkten Überschlagskammer 20 des zweiten Kunststoff-Hohlprofils 2 und der Überschlagssichtfläche 12 des ersten Kunststoff-Hohlprofils 1 verläuft.

Es ist somit offensichtlich, dass durch Verwendung dieses Schweißspiegels 3 und der vorangehend erläuterten Bearbeitungsschritte für die Kunststoff-Hohlprofile 1, 2 nicht nur eine Verschweißung der Gehrungsschnittflächen 13, 23 erfolgt, sondern auch die beiden stirnseitigen Enden der Überschlagskammern 10, 20 der Kunststoff-Hohlprofile 1, 2 jeweils mit angrenzenden Oberflächen des jeweils anderen Kunststoff-Hohlprofils 2, 1 verschweißt werden, so dass nicht nur eine größere Schweißfläche und entsprechend hohe Stabilität der Schweißverbindung im Eckbereich erzielt wird, sondern auch die die Verstärkungsprofile aufnehmenden Kammern 14, 24 und die beiden Überschlagskammern 10, 20 jeweils im Bereich ihrer stirnseitigen Enden umlaufend verschweißt und damit geschlossen werden, so dass keine Flüssigkeit in die Kammern 10, 20, 14, 24 eintreten kann.

Bei Bedarf ist es darüber hinaus möglich, auch noch die Stoßfläche zwischen der Frontsichtfläche 11 des ersten Kunststoff-Hohlprofils 1 und der Frontsichtfläche 21 des zweiten Kunststoff-Hohlprofils 2, d.h. im Bereich des abgesetzten Überschlages 210 miteinander zu verschweißen, wozu anschließend an die dritte Schweißfläche 32 eine entsprechend ausgerichtete weitere Schweißfläche vorgesehen werden kann, die sich zwischen den Frontsichtflächen 11, 21 der Hohlprofile 1, 2 positionieren lässt.

Das vorangehend erläuterte Verfahren ermöglicht es von daher, eine nach Art eines Holzrahmens gestaltete Eckverbindung zwischen Kunststoff-Hohlprofilen herzustellen, wobei die wesentlichen Kammern der Kunststoff-Hohlprofile durch eine Schweißverbindung geschlossen werden und vor Flüssigkeitszutritt geschützt sind, sowie eine hohe Verbindungsfestigkeit erreicht wird, obwohl die beiden zu verbindenden Kunststoff-Hohlprofile unterschiedliche Querschnittsgestaltungen voneinander aufweisen können.

Die vorangehend erläuterten Bearbeitungsschritte zur Vorbereitung der zu verschweißenden Enden der Kunststoff-Hohlprofile 1, 2 können wahlweise z.B. durch Sägeschnitte oder Frässchnitte bewirkt werden, wobei durch Ausgestaltung spezieller Fräswerkzeuge auch mehrere Arbeitsschritte in einem Arbeitsgang durchgeführt werden können.

## Patentansprüche

1. Verfahren zum Herstellen einer Eckverbindung für einen Rahmen eines Fensters oder einer Tür, bei dem ein erstes und ein zweites Kunststoff-Hohlprofil (1, 2) im Bereich ihrer Enden (100, 200) miteinander verschweißt werden, wobei das erste Hohlprofil (1) und das zweite Hohlprofil (2) jeweils eine von den jeweiligen Sichtflächen (11, 12; 21, 22) begrenzte Überschlagskammer (10, 20) aufweisen, wobei jeweils eine Sichtfläche die Frontsichtfläche (11, 21) und die angrenzende Sichtfläche die Überschlagssichtfläche (12, 22) bildet und die Sichtflächen (11, 12) des ersten Hohlprofils (1) einen ersten Eckwinkel (α₁) einschließen und die Sichtflächen (21, 22) des zweiten Hohlprofils (2) einen zweiten Eckwinkel (α₂) einschließen und nach Herstellung der Eckverbindung die Frontsichtfläche (21) des zweiten Hohlprofils (2) durchgängig über die gesamte Längserstreckung desselben verläuft, während die Frontsichtfläche (11) des ersten Hohlprofils (1) stumpf an der Frontsichtfläche (21) des zweiten Hohlprofils (2) endet, **gekennzeichnet durch** folgende Arbeitsschritte:
a) in das erste Hohlprofil (1) wird eine unter einem Winkel von 45° zur Längserstreckung desselben verlaufender Gehrungsschnittfläche (13) eingebracht, die sich vom Ende (100) des ersten Hohlprofils (1) und rechtwinklig zur Frontsichtfläche (11) bis in die Überschlagskammer (10) erstreckt;
b) die Überschlagskammer (10) des ersten Hohlprofils (1) wird senkrecht zu den Sichtflächen (11, 21) bis zu einer Eintrittslinie (A) des Gehrungsschnittes in die Überschlagskammer (10) ausgeklinkt;
c) die Frontsichtfläche (11) des ersten Hohlprofils (1) wird in einer der Breite (W) der Frontsichtfläche (21) des zweiten Hohlprofils entsprechenden Höhe (H) ausgehend vom Ende (100) des ersten Hohlprofils (1) entfernt;
d) in das zweite Hohlprofil (2) wird unter Belassung eines abgesetzten Überschlages (210) der Frontsichtfläche (21) eine unter einem Winkel von 45° zur Längserstreckung desselben verlaufende Gehrungsschnittfläche (23) eingebracht;
e) die Überschlagskammer (20) des zweiten Hohlprofils (2) wird ausgehend von der Gehrungsschnittfläche (23) in einem dem ersten Eckwinkel (α₁) des ersten Hohlprofils (1) entsprechenden Winkel zur Frontsichtfläche (21) und unter Fortsetzung des abgesetzten Überschlages (210) derselben ausgeklinkt;
f) das erste und zweite Hohlprofil (1, 2) werden zumindest bereichsweise unter Zwischenlage eines temporär an den einander zugewandten Schnittflächen angelegten Schweißspiegels (3) erwärmt und anschließend miteinander verschweißt,
wobei die Reihenfolge der Schritte a) bis e) beliebig ist.

2. Verfahren nach Anspruch 1, **dadurch gekennzeichnet, dass** die Dicke (S) des abgesetzten Überschlages (210) im zweiten Hohlprofil (2) der Tiefe (T), mit welcher die Frontsichtfläche (11) des ersten Hohlprofils (1) entfernt wird, entspricht.

3. Verfahren nach Anspruch 1 oder 2, **dadurch gekennzeichnet, dass** das erste und zweite Hohlprofil (1, 2) jeweils eine der Aufnahme von Verstärkungsprofilen dienende Kammer (14, 24) aufweisen und die Dicke (S) des abgesetzten Überschlages (210) im zweiten Hohlprofil (2) und die Tiefe (T), mit welcher die Frontsichtfläche (11) des ersten Hohlprofils (1) entfernt wird, so gewählt werden, dass die die Verstärkungsprofile aufnehmenden Kammern (14, 24) vollständig erhalten bleiben.

4. Verfahren nach einem der Ansprüche 1 bis 3, **dadurch gekennzeichnet, dass** die Dicke (S) des abgesetzten Überschlages (210) 3 mm bis 50 mm beträgt.

5. Verfahren nach einem der Ansprüche 1 bis 4, **dadurch gekennzeichnet, dass** die nach dem Entfernen der Frontsichtfläche (11) des ersten Hohlprofils (1) verbleibende und in der Frontsichtfläche (11) endende Schnittfläche (15) unter einem komplementär zum zweiten Eckwinkel (α₂) des zweiten Hohlprofils (2) verlaufenden Winkel (β) zur Frontsichtfläche (11) verläuft.

6. Verfahren nach einem der Ansprüche 1 bis 5, **dadurch gekennzeichnet, dass** die Frontsichtfläche (11) des ersten Hohlprofils (1) stumpf an den abgesetzten Überschlag (210) des zweiten Hohlprofils (2) angrenzt und in diesem Bereich die Frontsichtflächen (11, 21) miteinander verschweißt werden.

7. Verfahren nach einem der Ansprüche 1 bis 6, **dadurch gekennzeichnet, dass** ein mehrere winklig aneinander angrenzende Schweißflächen (30, 31, 32, 33) aufweisender Schweißspiegel (3) eingesetzt wird.

8. Verfahren nach Anspruch 7, **dadurch gekennzeichnet, dass** der Schweißspiegel (3) eine zwischen den Gehrungsschnittflächen (13, 23) der Hohlprofile (1,2) positionierbare erste Schweißfläche (30), hieran angrenzend eine im Bereich der ausgeklinkten Überschlagskammer (20) des zweiten Hohlprofils (2) und an dem stirnseitigen Ende der Überschlagskammer (10) des ersten Hohlprofils (1) positionierbare zweite Schweißfläche (31) und hieran anschließend eine zwischen der Überschlagssichtfläche (12) des ersten Hohlprofils (1) und dem stirnseitigen Ende der Überschlagskammer (20) des zweiten Hohlprofils (2) positionierbare dritte Schweißfläche (32) aufweist.

9. Verfahren nach Anspruch 8, **dadurch gekennzeichnet, dass** der Schweißspiegel (3) eine zwischen den Frontsichtflächen (11, 21) der Hohlprofile (1, 2) positionierbare weitere Schweißfläche (33) aufweist.

## Claims

1. Method for producing a corner connection for a frame of a window or door, in which a first and a second plastics material hollow profile (1, 2) are welded to one another in the region of their ends (100, 200), wherein the first hollow profile (1) and the second hollow profile (2) in each case have a step chamber (10, 20) delimited by the respective visible faces (11, 12; 21, 22), wherein one respective visible face forms the front visible face (11, 21) and the adjacent visible face forms the step visible face (12, 22) and the visible faces (11, 12) of the first hollow profile (1) enclose a first corner angle (α₁) and the visible faces (21, 22) of the second hollow profile (2) enclose a second corner angle (α₂) and, after production of the corner connection, the front visible face (21) of the second hollow profile (2) runs continuously over the entire longitudinal extent thereof, while the front visible face (11) of the first hollow profile (1) ends bluntly on the front visible face (21) of the second hollow profile (2), **characterised by** the following working steps:
a) a mitre sectional surface (13), which runs at an angle of 45° to the longitudinal extent of the first hollow profile (1) and which extends from the end (100) of the first hollow profile (1) and at a right angle to the front visible face (11) into the step chamber (10), is introduced into the first hollow profile (1);
b) the step chamber (10) of the first hollow profile (1) is notched perpendicular to the visible faces (11, 21) up to an entry line (A) of the mitre suction into the step chamber (10);
c) the front visible face (11) of the first hollow profile (1) is removed at a height (H) corresponding to the width (W) of the front visible face (21) of the second hollow profile, proceeding from the end (100) of the first hollow profile (1);
d) a mitre sectional surface (23) running at an angle of 45° to the longitudinal extent of the second hollow profile (2) is introduced into the second hollow profile (2) leaving an offset step (210) of the front visible face (21);
e) the step chamber (20) of the second hollow profile (2) is notched proceeding from the mitre sectional surface (23) at an angle corresponding to the first corner angle (α₁) of the first hollow profile (1) to the front visible face (21) and with a continuation of the offset step (210) thereof;
f) the first and second hollow profiles (1, 2) are heated, at least in regions, with the interposition of a welding mirror (3) temporarily placed on the mutually facing sectional surfaces and then welded to one another,
wherein the order of the steps a) to e) is as desired.

2. Method according to claim 1, **characterised in that** the thickness (S) of the offset step (210) in the second hollow profile (2) corresponds to the depth (T) to which the front visible face (11) of the first hollow profile (1) is removed.

3. Method according to claim 1 or 2, **characterised in that** the first and second hollow profile (1, 2) in each case have a chamber (14, 24) serving to receive reinforcement profiles and the thickness (S) of the offset step (210) in the second hollow profile (2) and the depth (T) to which the front visible face (11) of the first hollow profile (1) is removed, are selected such that the chambers (14, 24) receiving the reinforcement profiles are completely retained.

4. Method according to any one of claims 1 to 3, **characterised in that** the thickness (S) of the offset step (210) is 3 mm to 50 mm.

5. Method according to any one of claims 1 to 4, **characterised in that** the sectional surface (15) remaining after the removal of the front visible face (11) of the first hollow profile (1) and ending in the front visible face (11) runs at an angle (ß) to the front visible face (11) that runs in a complementary manner to the second corner angle (α₂) of the second hollow profile (2).

6. Method according to any one of claims 1 to 5, **characterised in that** the front visible face (11) of the first hollow profile (1) bluntly adjoins the rebated step (210) of the second hollow profile (2) and the front visible faces (11, 21) are welded to one another in this region.

7. Method according to any one of claims 1 to 6, **characterised in that** a welding mirror (3) having a plurality of welding faces (30, 31, 32, 33) adjoining one another at angles is used.

8. Method according to claim 7, **characterised in that** the welding mirror (3) has a first welding face (30) that can be positioned between the mitre sectional surfaces (13, 23) of the hollow profiles (1, 2), adjoining this, a second welding face (31) that can be positioned in the region of the notched step chamber (20) of the second hollow profile (2) and on the end-face end of the step chamber (10) of the first hollow profile (1) and, adjoining this, a third welding face (32) that can be positioned between the step visible face (12) of the first hollow profile (1) and the end-face end of the step chamber (20) of the second hollow profile (2).

9. Method according to claim 8, **characterised in that** the welding mirror (3) has a further welding face (33) that can be positioned between the front visible faces (11, 21) of the hollow profiles (1, 2).

## Revendications

1. Procédé pour fabriquer une liaison de coin pour un cadre de fenêtre ou de porte, par l'intermédiaire duquel un premier et un deuxième profils creux en matière plastique (1, 2) sont soudés ensemble dans la zone de leurs extrémités (100, 200), de telle sorte que le premier profil creux (1) et le deuxième profil creux (2) présentent respectivement une chambre de renvoi d'angle (10, 20) délimitée par les surfaces visibles respectives (11, 12 ; 21, 22), de sorte qu'une première surface visible constitue la surface visible avant (11, 21) et la surface visible limitrophe constitue la surface visible de renvoi d'angle (12, 22) , et les surfaces visibles (11, 12) du premier profil creux (1) comportent un premier angle de coin (α1), et les surfaces visibles (21, 22) du deuxième profil creux (2) comportent un deuxième angle de coin (α2), et après la fabrication de la liaison de coin, la surface visible avant (21) du deuxième profil creux (2) s'étend de la même manière sur toute l'étendue longitudinale, tandis que la surface visible avant (11) du premier profil creux (1) se termine tronquée au niveau de la surface visible avant (21) du deuxième profil creux (2), **caractérisé par** les étapes de travail suivantes :
a) dans le premier profil creux (1) va être réalisée une surface découpée en biseau (13) de manière identique sur un angle de 45° par rapport à l'étendue longitudinale, qui s'étend depuis l'extrémité (100) du premier profil creux (1) et perpendiculairement par rapport à la surface visible avant (11) jusque dans la chambre de renvoi d'angle (10) ;
b) la chambre de renvoi d'angle (10) du premier profil creux (1) va être découpée verticalement par rapport aux surfaces visibles (11, 21) jusqu'à une ligne d'entrée (A) de la découpe en biseau dans la chambre de renvoi d'angle (10) ;
c) la surface visible avant (11) du premier profil creux (1) va être enlevée de la largeur (W) de la surface visible avant (21) du deuxième profil creux, ou de la hauteur correspondante (H) en partant depuis l'extrémité (100) du premier profil creux (1) ;
d) dans le deuxième profil creux (2) va être réalisée une surface découpée en biseau (23) de manière identique sur un angle de 45° par rapport à l'étendue longitudinale, sous le renvoi d'angle enlevé (210) de la surface visible avant (21) ;
e) la chambre de renvoi d'angle (20) du deuxième profil creux (2) va être) découpée de manière identique, en partant de la surface découpée en biseau (23) sur l'un parmi le premier angle de coin (α1) du premier profil creux (1), et un coin correspondant par rapport à la surface visible avant (21), et à la suite du renvoi d'angle enlevé (210) ;
f) les premier et deuxième profils creux (1, 2), au moins par secteur, vont être chauffés et ensuite soudés ensemble par l'intermédiaire d'un miroir de soudage (3) disposé temporairement au niveau des surfaces de soudage tournées l'une vers l'autre, sont réchauffés, de sorte que l'ordre des étapes a) à e) est au choix.

2. Procédé selon la revendication 1, **caractérisé en ce que** l'épaisseur (s) du renvoi d'angle enlevé (210) dans le deuxième profil creux (2) correspond à la profondeur (T) sur laquelle la surface visible avant (11) du premier profil creux (1) va être enlevée.

3. Procédé selon la revendication 1 ou 2, **caractérisé en ce que** les premier et deuxième profils creux (1, 2) comportent chacun respectivement une chambre (14, 24) dédiée à l'accueil des profils de renfort, et l'épaisseur (S) du renvoi d'angle enlevé (210) dans le deuxième profil creux (2) et la profondeur (T), sur laquelle la surface visible avant (11) du premier profil creux (1) est enlevée, sont choisies de telle sorte que les chambres (14, 24) de réception des profils de renfort sont entièrement maintenues.

4. Procédé selon l'une quelconque des revendications 1 à 3, **caractérisé en ce que** l'épaisseur (S) du renvoi d'angle enlevé (210) est dans la plage de 3 mm à 50 mm.

5. Procédé selon l'une quelconque des revendications 1 à 4, **caractérisé en ce qu'**après l'enlèvement, la surface visible avant (11) du premier profil creux (1) s'étend de manière serrée et dans la surface de découpe (15) se terminant dans la surface visible avant (11), sous un angle (β) s'étendant de façon complémentaire au deuxième angle de coin (α2) du deuxième profil creux (2) par rapport à la surface visible avant (11).

6. Procédé selon l'une quelconque des revendications 1 à 5, **caractérisé en ce que** la surface visible avant (11) du premier profil creux (1) est émoussée à proximité du renvoi d'angle enlevé (210) du deuxième profil creux (2), et **en ce que** les surfaces visibles avant (11, 21) sont soudées ensemble dans ce secteur.

7. Procédé selon l'une quelconque des revendications 1 à 6, **caractérisé en ce qu'**on utilise un miroir de soudage (3) présentant plusieurs surfaces de soudage angulaires mutuellement en contact (30, 31, 32, 33) .

8. Procédé après la revendication 7, **caractérisé en ce que** le miroir de soudage (3) comporte une première surface de soudage (30) positionnée entre les surfaces découpées en biseau (13, 23) des profils creux (1,2), et devant une deuxième surface de soudage (31) positionnée dans le secteur de la chambre de renvoi d'angle découpée (20) du deuxième profil creux (2), et à l'extrémité de front de la chambre de renvoi d'angle (10) du premier profil creux (1), et encore devant entre une troisième surface de soudage (32) positionnée entre la surface visible de renvoi d'angle (12) du premier profil creux (1) et l'extrémité de front de la chambre de renvoi d'angle (20) du deuxième profil creux (2).

9. Procédé selon la revendication 8, **caractérisé en ce que** le miroir de soudage (3) comporte une autre surface de soudage (33) positionnée entre les surfaces visibles avant (11, 21) des profils creux (1, 2).
